# EUROPEAN PATENT APPLICATION

(11) **EP 2 395 718 A1**
(43) Date of publication of application: **14.12.2011**
(21) Application number: 11163229.5
(22) Date of filing: 20.04.2011
(51) Int. Cl.: H04L 12/58

(54) **Method and apparatus for electronically posting a graphic identifier to a plurality of servers**

(30) Priority: 23.04.2010 US 327267 P
(71) Applicant: Research In Motion Limited, Waterloo, ON N2L 3W8 (CA)
(72) Inventor: Cundill, Andrew, Philip, Ottawa Ontario K2K 3K1 (CA)
(74) Representative: MERH-IP Matias Erny Reichl Hoffmann

(57) **Abstract**

The present specification relates generally to computing devices and more particular relates to a method and apparatus for electronically posting a graphic identifier to a plurality of servers. In one aspect, a mobile electronic device is equipped with a camera configured to capture a graphic. The mobile electronic device is further equipped to access at least one of a plurality of networking accounts hosted by servers connected to a network that also connects to said mobile electronic device. The mobile electronic device is configured to automatically post said graphic as an avatar associated with one or more of said networking accounts.

## Description

### FIELD OF INVENTION

The present specification relates generally to computing devices and more particular relates to a method and apparatus for electronically posting a graphic identifier to a plurality of servers.

### BACKGROUND

The evolution of computers is currently quite active in the mobile device environment. It is now well-known to including calendaring, contacts, and messaging functions in mobile devices. More recently, however, there has been a veritable explosion of the number and type of applications that are configured to the unique form factors and computing environments of mobile devices. Likewise there has been an explosion of social networking servers which may be managed from a mobile device.

### SUMMARY

An aspect of this specification provides a method for electronically posting a graphic identifier to a plurality of servers, the method comprising: receiving a graphic at a processor of a mobile electronic device; receiving, at the processor, an instruction to post the graphic as a graphic identifier on two or more accounts that are associated with the mobile electronic device; identifying, using the processor, the two or more accounts; connecting, via a network, to at least one of the plurality of servers hosting the two or more accounts; and transmitting, via the network, the graphic for publication as a graphic identifier for the two or more accounts.

The graphic can comprise a photograph captured by the mobile electronic device.

The instruction can be received from a menu generated within a camera application within the mobile electronic device.

The instruction can be a single instruction.

The transmitting can be effected via a plug-in application that can be configured to interact with an application on each of the at least one of the plurality of servers.

The at least one of the two or more accounts can be a social networking account.

The at least one of the two or more accounts can be an instant message account.

The at least one of the two or more accounts can be an online community account.

The at least one of the two or more accounts can be an enterprise email account.

The method can further comprise automatically transmitting the graphic to all the two or more accounts which have been logged in from the mobile electronic device.

The two or more accounts which have been logged in can be logged in via provision of authentication of log in credentials prior to performance of the method.

The graphic can correspond to an avatar for each of the two or more accounts.

The method can further comprise selecting the two or more accounts prior to the connecting and the transmitting.

Another aspect of this specification provides a mobile electronic device for posting a graphic identifier to a plurality of servers, comprising: a processor configured to: receive a graphic; receive an instruction to post the graphic as a graphic identifier on two or more accounts that are associated with the mobile electronic device; and identify the two or more accounts associated with the plurality of servers hosting the two or more accounts; and a network interface, under control of the processor, the network interface configured to: connect, via a network, to at least one of the plurality of servers; and transmit via the network the graphic for publication as a graphic identifier for the two or more accounts.

The mobile electronic device can further comprise an optical capture unit under control of the processer. The graphic can comprise a photograph captured by the optical capture unit.

The mobile electronic device can further comprise a camera application under control of the processor. The instruction can receive from a menu generated within the camera application.

The instruction can be a single instruction.

The mobile electronic device can further comprise a plug-in application under control of the processor, the plug-in application configured to interact with an application on each of the at least one of the plurality of servers. The transmit can be effected via the plug-in application.

The account can be a social networking account.

Another aspect of this specification provides a computer program product, for a mobile electronic device comprising a processor, the computer program product comprising a non-transitory computer-readable storage medium having a computer-readable code adapted to be executed on the processor to implement a method for electronically posting a graphic identifier to a plurality of servers, the method comprising: receiving a graphic at a processor of a mobile electronic device; receiving at the processor an instruction to post the graphic as a graphic identifier on two or more accounts that are associated with the mobile electronic device; identifying using the processor the two or more accounts; connecting via a network to at least one of the plurality of servers hosting the two or more accounts; and transmitting via the network the graphic for publication as a graphic identifier for the two or more accounts.

### BRIEF DESCRIPTION OF THE DRAWINGS

For a better understanding of the various embodiments described herein and to show more clearly how they may be carried into effect, reference will now be made, by way of example only, to the accompanying drawings which show at least one example embodiment and in which:

Figure 1 is a schematic representation of a system for electronically posting a graphic identifier to a plurality of servers.

Figure 2 is a representation of a front view of an exemplary mobile computing device of the system of Figure 1.

Figure 3 is a representation of a rear view of the mobile computing device of Figure 2.

Figure 4 is a block diagram of the exemplary mobile computing device shown in Figure 1.

Figure 5 is a representation of a variation of the mobile computing device of Figure 1.

Figure 6 is a flow-chart depicting a method of posting a graphic identifier to a plurality of servers.

Figure 7 shows the exemplary mobile computing device of Figure 1 during an example of performance of one of the blocks of the method of Figure 6.

Figure 8 shows the exemplary mobile computing device of Figure 1 during an example of performance of one of the blocks of the method of Figure 6.

Figure 9 shows the exemplary mobile computing device of Figure 1 during another example of performance of one of the blocks of the method of Figure 6.

Figure 10 shows the exemplary mobile computing device of Figure 1 during yet another example of performance of one of the blocks of the method of Figure 6.

Figure 11 is a block diagram showing an example implementation of a publication manager application.

### DETAILED DESCRIPTION

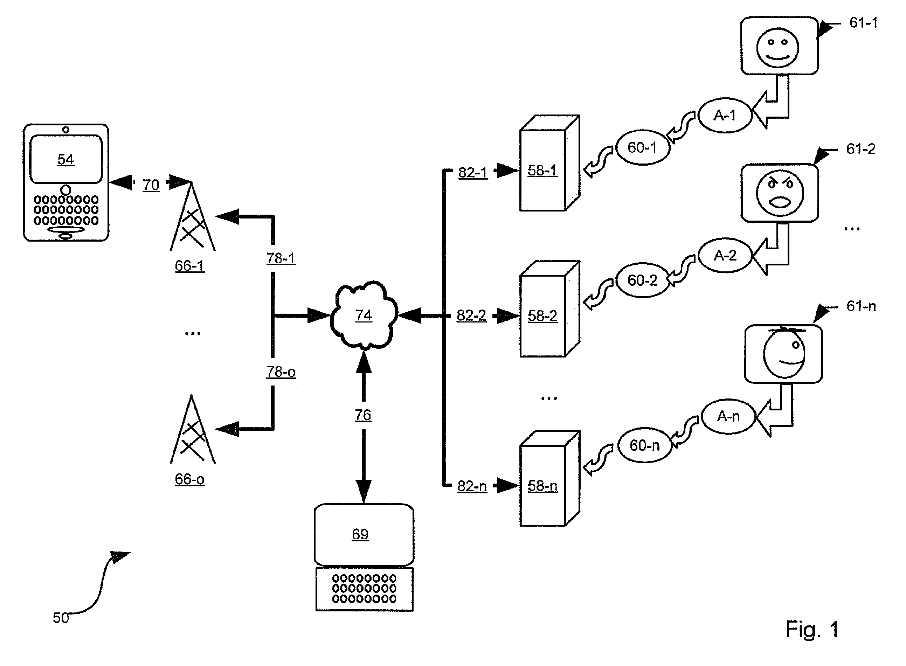

Referring now to Figure 1, a system for electronically posting a graphic identifier to a plurality of servers is indicated generally at 50. In a present embodiment, system 50 comprises at least one computing device in the form of a mobile computing device 54 and a plurality of servers 58-1, 58-2 ... 58-n. (Generically, server 58, and collectively, servers 58).

A wireless link 70 connects computing device 54 with one of a plurality of wireless base stations 66. In Figure 1, computing device 54 is shown as connecting to a first base station 66-1 via wireless link 70, but, since computing device 54 is mobile, computing device 54 can also connect to other base stations 66 in system 50. Backhaul links 78 connect each base station 66 to a network 74. Additional backhaul links 82 connect network 74 to each server 58.

Computing device 54 can be any type of electronic device that can be used in a self-contained manner and to interact with content available on network 74. Interaction includes displaying of information on computing device 54 as well as to receive input at computing device 54 that can in turn be sent back over network 74. Computing device 54 will be explained in greater detail below.

Servers 58 can be based on any well-known server environment including a module that houses one or more central processing units, volatile memory (e.g. random access memory), persistent memory (e.g. hard disk devices) and network interfaces to allow servers 58 to communicate over network 74. For example, each server 58 can be a ProLiant® Server from Hewlett-Packard Company, 3000 Hanover Street Palo Alto, CA 94304-1185 USA having a plurality of central processing units and having several gigabytes of random access memory. However, it is to be emphasized that this particular server is merely a non-limiting example, and a vast array of other types of computing environments for each server 58 is contemplated. Furthermore, it is contemplated that each server 58 may be implemented as a plurality of interconnected servers, in a so-called server farm, which are mirrored or otherwise configured for load balancing.

As will be discussed further below, each server 58 maintains a different networking application 60. Networking applications can be, by way of non-limiting example, social networking applications, or instant messaging applications. Non-limiting examples of social networking application 60 include FACEBOOK^{™}, TWITTER^{™}, LINKEDIN^{™}, and MYSPACE^{™}. Social networking application 60 can also comprise instant message applications such BLACKBERRY MESSENGER™, AOL Instant Messenger (AIM™), YAHOO™ Messenger (YM), GOOGLE™ Talk (Gtalk), LOTUS CONNECTIONS™, WINDOWS™ Live Messenger. There are many others. Due to the fact there are many applications, one of the advantages provided by this specification is the ability to easily and quickly post a graphic identifier to a plurality of different social networking applications 60. Accordingly, each social networking application 60 is configured to host at least one account A that is associated with device 54. (While not shown in it is contemplated that a plurality of accounts A may be hosted on a single server 58 and each of those accounts A may be associated with device 54.) Thus, server 58-1 executes application 60-1 which hosts account A-1; server 58-2 executes application 60-2 which hosts account A-2; and server 58-n executes application 60-n which hosts account A-n. It will now be understood that where system 50 includes additional devices 54, as is expected in a usual deployment, then each server 58 may likewise host one or more additional accounts respective to those devices.

It is to be noted that the nature of the association between a device 54 and a given account A can be configured in a plurality of ways and so the way in which such association is implemented is not particularly limited. For example, each account A can include a relative identifier having authentication credentials maintained by a respective server 58 that include, for example, a login string and a password string. The provision of such credentials at device 54, and the delivery of those credentials from device 54, through network 74 and to the appropriate server 58, can then configure that device 54 to be associated with account A, such that the account A can be accessed and otherwise interaction with that account A can be effected by device 54. Such relative identifiers provide the opportunity for each account A to be accessed from different devices, other than or in addition to, device 54. Alternatively, or in addition, an absolute identifier for a given device 54, such as an International Mobile Equipment Identity (IMEI), can be associated with a given account A so that access to the account A is presumed to be authorized by device 54.

Each Account A is also configured to store a graphic identifier 61. Graphic identifier 61 may, in certain contexts, be colloquially referred to as an avatar. Content that is generated on device 54, or on a computing device that has access to account A, may be generated in association with its respective graphic identifier. Note that in Figure 1, each graphic identifier 61 is different, illustrating that while each account A may be commonly associated with device 54, nonetheless each graphic identifier 61 conveys, at least upon an initial appearance, that each account A is not commonly associated with device 54.

A client machine 69 also connects to network 74 via a link 76. In a present example implementation, client machine 69 is a desktop, notebook, or laptop computer and link 76 is an Internet connection such as, by way of non-limiting example, a wireless WiFi link or a wired Digital Subscriber Line (DSL) link. Other implementations for client machine 69 are contemplated, including the fact that client machine 69 can be implemented as a second computing device 54 that accesses network 74 via either base station 66. Client machine 69 is configured to access one or more accounts A hosted by servers 58. Such access may be provided by client machine 69 having its own account (not shown) associated with each social networking application 60. Alternatively, client machine 69 may be configured to view content associated with each account A via a web-browser. The means by which client machine 69 can view content associated with each account A is not particularly limited, and generally varies according to the social networking application 60 that hosts each account A. Referring again to Figure 1, where each graphic identifier 61 is different, it can be noted that access at client machine 69 to content and a respective graphic identifier 61 for each account A can convey that each account A has no common association.

It should now be understood that the nature of network 74 and links 70, 76, 78 and 82 associated therewith is not particularly limited and are, in general, based on any combination of architectures that will support interactions between computing device 54 and servers 58. In a present embodiment, network 74 includes the Internet as well as appropriate gateways and backhauls to links 76, 78 and 82. For example, backhaul links 78 and backhaul links 82 can be based on a T1, T3, 03 or any other suitable wired or wireless connections. Accordingly, the links 76, 78 and 82 between network 74 and the interconnected components are complementary to functional requirements of those components.

Link 70 may be based on core mobile network infrastructure, such as, by way of non-limiting examples, one or more of Global System for Mobile communications ("GSM"); Code Division Multiple Access ("CDMA"); CDMA 2000;) 3G; or Evolution-Data Optimized or Evolution-Data ("EVDO"); or successors thereto; or on wireless local area network ("WLAN") infrastructures such as, by way of non-limiting examples, the Institute for Electrical and Electronic Engineers ("IEEE") 802.11 Standard (and its variants) or BLUETOOTH™ or the like or hybrids thereof. Note that in an example variation of system 50 it is contemplated that computing device 54 could be other types of computing devices whereby link 70 is a wired connection.

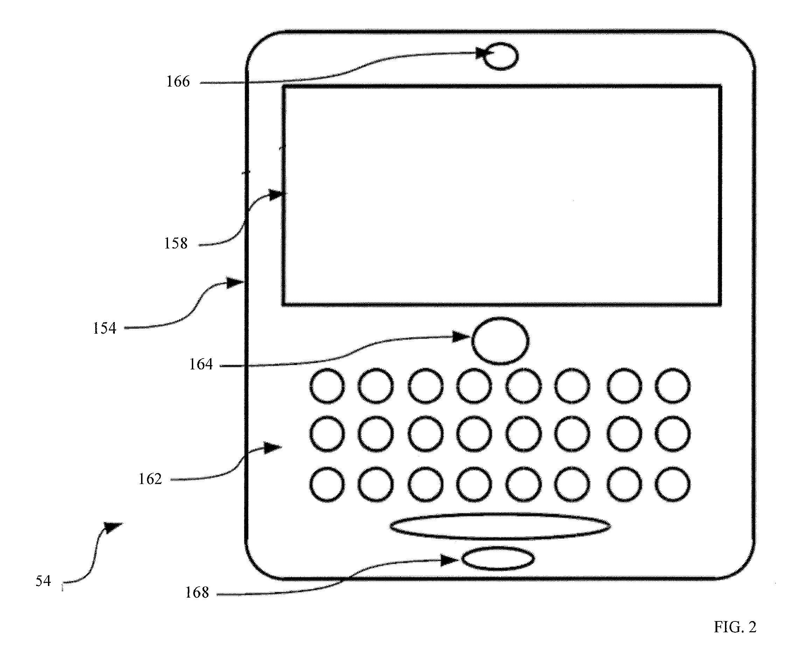

Figure 2, Figure 3 and Figure 4 show different views and representations of a non-limiting example of a mobile computing device 54 which can be used to post a graphic identifier on a plurality of different servers, as discussed in greater detail below. It is to be understood that mobile computing device 54 is an example, and it will be apparent to those skilled in the art that a variety of different portable electronic device structures are contemplated. Indeed variations on mobile computing device 54 can include, without limitation, a cellular telephone, a portable email paging device, a camera, a portable music player, a portable video player, a portable video game player, a tablet computing device, etc.

Referring to Figure 2, device 54 comprises a chassis 154 that supports a display 158. Display 158 can comprise one or more light emitters such as an array of light emitting diodes (LED), liquid crystals, plasma cells, or organic light emitting diodes (OLED). Other types of light emitters are contemplated. Chassis 154 also supports a keyboard 162. It is to be understood that this specification is not limited to any particular structure, spacing, pitch or shape of keyboard 162, and the depiction in Figure 2 is an example. For example, full or reduced "QWERTY" keyboards are contemplated. Other types of keyboards are contemplated, such as a virtual keyboard implemented as key images rendered on a touch screen display. Device 54 also comprises a pointing device 164 which can be implemented as a touch-pad, joystick, trackball, track-wheel, or as a touch sensitive membrane on display 158. Device 54 also comprises a speaker 166 for generating audio output, and a microphone 168 for receiving audio input.

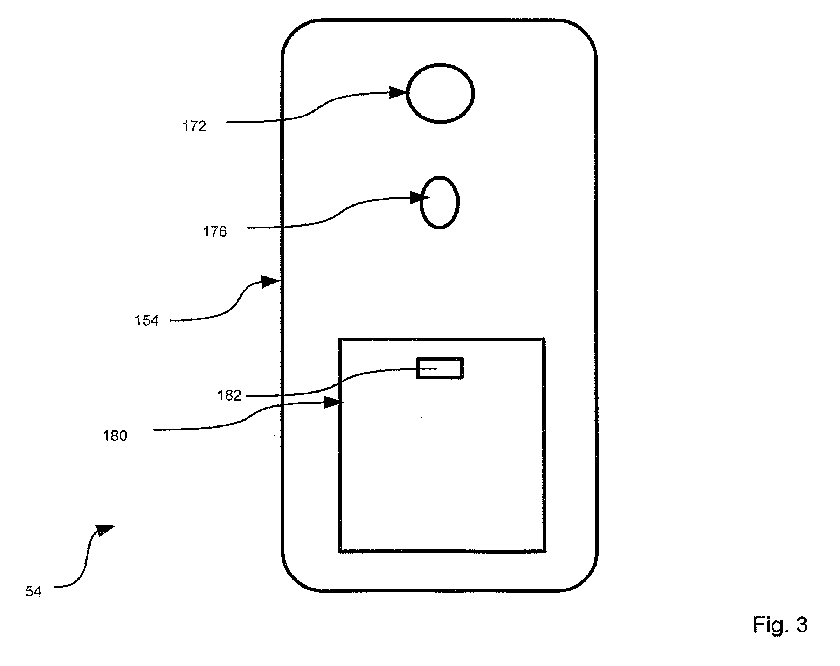

Referring to Figure 3, a rear view of device 54 is shown. In Figure 3, device 54 is also shown as comprising a flash 172 and an optical capture unit 176. It is to be understood that the term "optical" as used in relation to optical capture unit 176 is not directed to a lens structure or the like, but rather to refer to an array of charge couple devices (CCD) (or a functionally equivalent transducer structure) that is configured, in association with a lens structure, to receive an image in the form of electro-magnetic energy substantially within the visible spectrum, and to convert that energy into an electronic signal which can be further processed. Typically, the electronic signal is digitized for storage. The stored digitized image can be further processed and can be generated on display 158. Optical capture unit 176 will be discussed in greater detail below. Flash 172 can activate to provide additional lighting to assist the capture of energy by optical capture unit 176. In general, it will now be understood that optical capture unit 176 can, if desired, be implemented, or based on, a digital camera function as commonly incorporated into portable electronic devices.

A battery compartment cover 180 is also shown in Figure 3, with a tab 182 that can be manipulated to unlock cover 180 from chassis 154 and so that cover 180 can be detached from chassis 154. However, it should be noted that user access to the battery via a battery compartment cover 180 is optional.

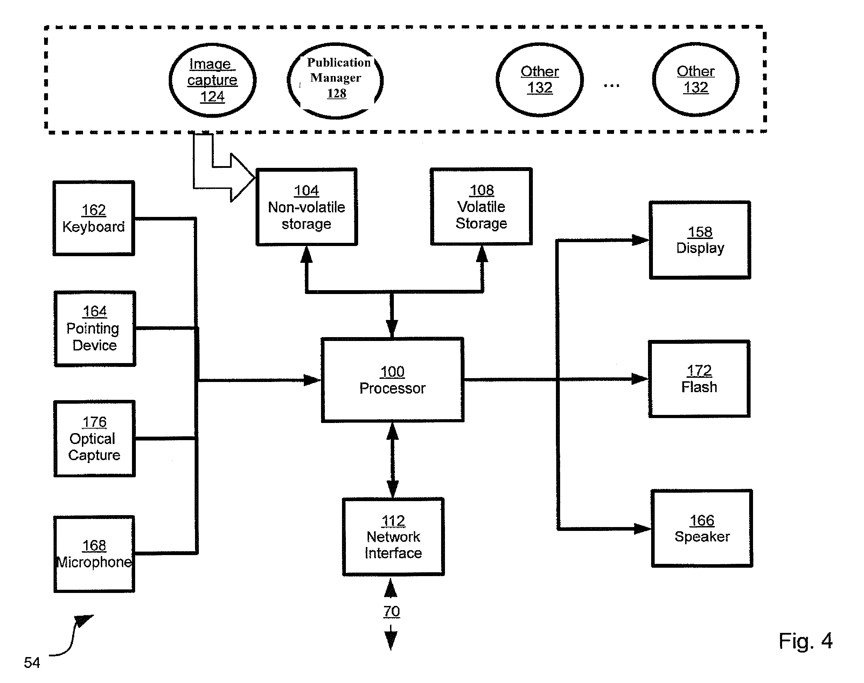

Figure 4 shows a schematic block diagram of the electronic components of device 54. It should be emphasized that the structure in Figure 4 is an example. Device 54 includes a plurality of input devices which in a present embodiment includes keyboard 162, pointing device 164, and microphone 168, in addition to optical capture unit 176. Other input devices are contemplated. Input from keyboard 162, pointing device 164, microphone 168 and optical capture unit 176 is received at a processor 100. Processor 100 can be configured to execute different programming instructions that can be responsive to the input received via input devices. To fulfill its programming functions, processor 100 is also configured to communicate with a non-volatile storage unit 104 (e.g. Erase Electronic Programmable Read Only Memory ("EEPROM"), Flash Memory) and a volatile storage unit 108 (e.g. random access memory ("RAM")). Programming instructions that implement the functional teachings of device 54 as described herein are typically maintained, persistently, in non-volatile storage unit 104 and used by processor 100 which makes appropriate utilization of volatile storage 108 during the execution of such programming instructions.

Processor 100 in turn is also configured to control display 158, speaker 166 and flash 172, also in accordance with different programming instructions and optionally responsive to different input receive from the input devices.

Processor 100 also connects to a network interface 112, which can be implemented in a present embodiment as a radio configured to communicate over link 70, although in variants, device 54 can also include a network interface for communicating over a wired link. Network interface 112 can thus be generalized as a further input/output device that can be utilized by processor 100 to fulfill various programming instructions. It will be understood that interface 112 is configured to correspond with the network architecture that defines such link 70. It is also contemplated each network interface 112 can include multiple radios to accommodate the different protocols that may be used to implement different types of links where the network architecture for each link 70 differs between base stations 66.

In a present embodiment, device 54 is also configured to maintain, within non-volatile storage 104, an image capture application 124, a publication manager application 128 and, optionally, a plurality of additional applications 132. Non-limiting examples of additional applications 132 can comprise, without limitation, one or more of social networking client applications, e.g., TWITTER™, FACEBOOK™, MYSPACE™, LINKEDIN™; IM client applications, e.g., BBM™, AIM™, YAHOO™ Messenger, and enterprise networking client applications, e.g., LOTUS CONNECTIONS™, etc.; other applications associated with online communities, e.g., FLICKR™, Gtalk, etc. Any one or more of image capture application 124, publication manager application 128 and additional applications 132 can be pre-stored in non-volatile storage 104 upon manufacture of device 54, or downloaded via network interface 112 and saved on non-volatile storage 104 at any time subsequent to manufacture of device 54.

Processor 100 is configured to execute image capture application 124 to capture images and publication manager application 128 to post or publish those images to one or more of servers 58, as will be explained further below.

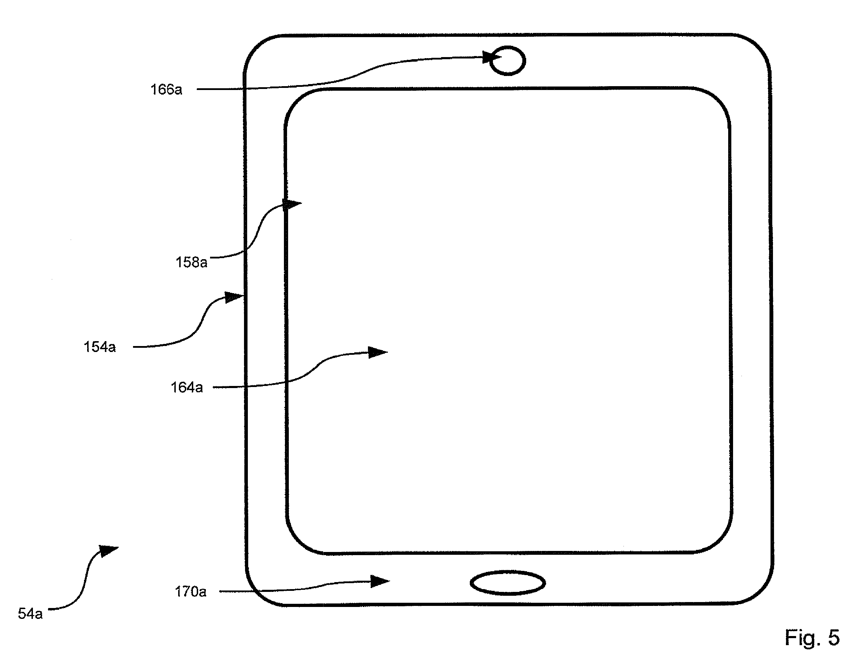

Referring briefly to Figure 5, a variation on device 54 is indicated generally as device 54a. Device 54a comprises many of the same components as device 54, and therefore like components bear like references except followed by the suffix "a". Of note is that device 54a excludes keyboard 162 and pointing device 164. Instead, device 54a comprises a touch screen 164a which provides the combined functionality of keyboard 162 and pointing device 164. Further variations on device 54 will now occur to those skilled in the art, but for convenience, further discussion of the present specification will focus on device 54 as described above.

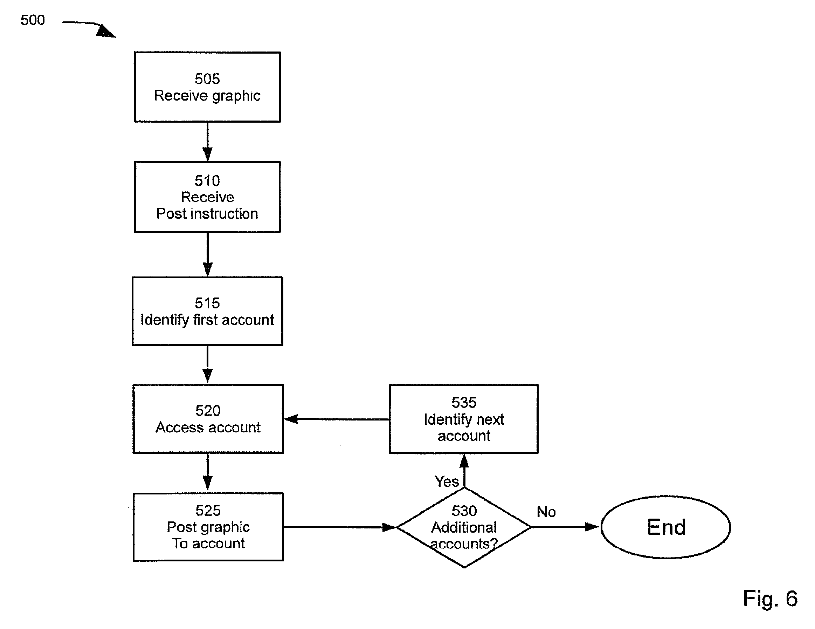

Referring now to Figure 6, a flow-chart depicting a method for electronically posting a graphic to a plurality of servers is indicated generally at 500. Method 500 can be implemented using system 50, and for purposes of explaining method 500 it will be assumed that method 500 is performed using system 50. However, it is to be understood that variations are contemplated to both method 500 and system 50 and such variations are within the scope of this specification.

Block 505 comprises receiving a graphic. Block 505 is typically performed by device 54, and the graphic is received at processor 100 and is stored in either non-volatile storage 104 or volatile storage 108 or both for subsequent processing. The means by which the graphic is received is not particularly limited. For example, the graphic may be downloaded from a web-server (not shown) connected to network 74. The graphic may also be locally generated on device 54 using a graphic package. In a present implementation, the graphic comprises a photograph received using via optical capture unit 176 using image capture application 124. In general terms, when executed on processor 100, image capture application 124 configures device 54 to operate as a digital camera, whereby display 158 operates as a viewfinder, and one or more keys on keyboard 162, or pointing device 164, may be used to adjust settings (e.g. flash 172) and provide an input to activate a virtual shutter and thereby cause an image within the range of optical capture unit 176 to be captured and received at processor 100, whereupon the captured image can be stored in either non-volatile storage 104 or volatile storage 108 or both.

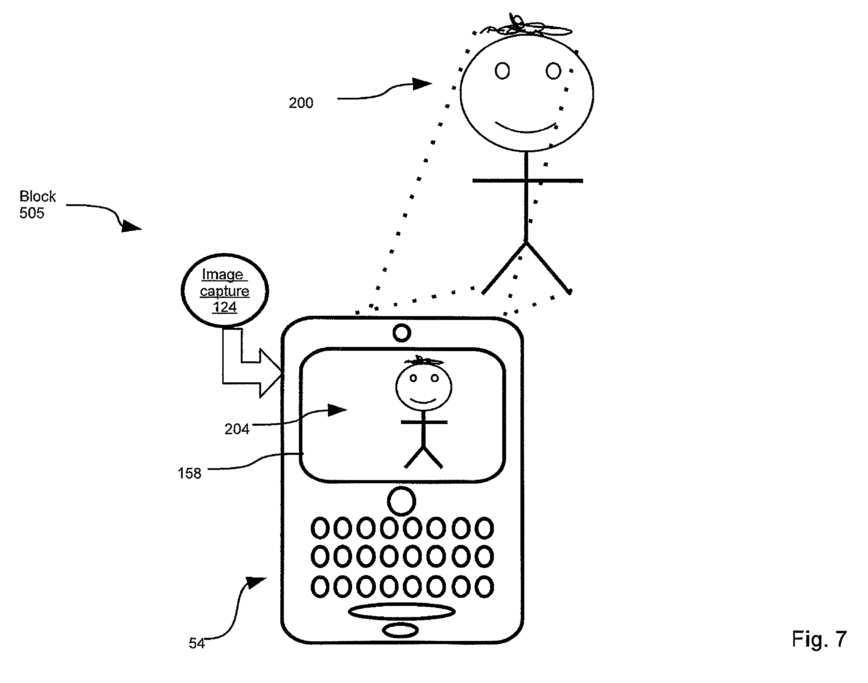

A non-limiting example of performance of block 505 is shown in Figure 7, whereby an image 200 is captured on device 54 using image capture application 124 resulting in captured image 204 being generated on display 158.

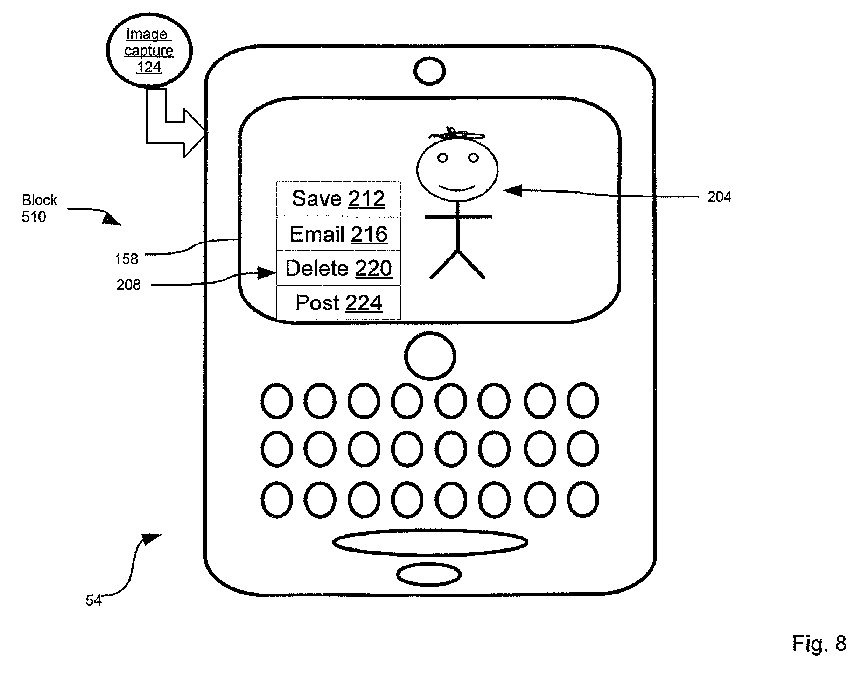

Block 510 comprises receiving an instruction to post or publish the graphic received at block 505 to one or more accounts. Again, the means by which this instruction is received is not particularly limited, and can comprise any input instruction received at processor 100 to initiate the replacement of the current contents of one or more of graphic identifier 61-1, graphic identifier 61-2, or graphic identifier 61-n with captured image 204. In a present implementation, block 510 is effected within image capture application 124 by invocation of a menu within image capture application 124. Example performance of block 510 is shown in Figure 8, where a menu 208 from within image capture application 124 is invoked and generated on display 158 under the control of processor 100.

Menu 208 may comprise any desired list of menu options for further management or processing of captured image 204. In Figure 8, menu 208 comprises a save selection 212 for saving captured image 204 to a location on non-volatile storage 104, an email selection 216 for sending captured image 204 to a designated email address that is reachable via network 74; a delete selection 220 for deleting captured image 204 from device 54 and a post selection 224 for posting captured image 204 to one or more accounts A as a respective graphic identifier 61. Thus, in this example, block 510 can be effected by manipulation of one of the input devices on device 54 to bring "post selection 224" into focus and to activate that selection, thereby sending an instruction to processor 100 to post the graphic received at block 505.

In one non-limiting possible implementation, performance of block 510 can result in execution of publication manager application 128 from image capture application 124. Publication manager application 128, as executing on processor 100, can then be utilized to effect the remaining blocks of method 500.

Returning to Figure 6, block 515 comprises identifying a first account to which the graphic received at block 505 is to be posted. In the example discussed in relation to Figure 1, it is assumed that account A-1, account A-2 and account A-n are all associated with device 54. Accordingly, block 515 can be effected by identifying each account A and selected any one of those accounts.

Block 520 comprises accessing the account identified at block 515. Block 520 can be effected via an application programming interface that is tailored to the account identified at block 515. Indeed, it is contemplated that the software used to implement each application 60 is different, and accordingly a different application programming interface may be used for each application 60.

As part of performing block 520, credentials to authenticate access to a given account A will be provided, if needed. Also as part of performing block 520, the portion of application 60 that manages the graphic identifier 61 for the account A will be accessed, through the application programming interface incorporated into publication manager application 128.

Block 525 comprises posting the graphic received at block 505 to the account accessed at block 520. Again, the means by which this effected is not particularly limited. In the specific example discussed above, and using the application programming interface associated with publication manager application 128, captured image 204 is sent over network 74 to the server 58 corresponding with the account identified at block 515.

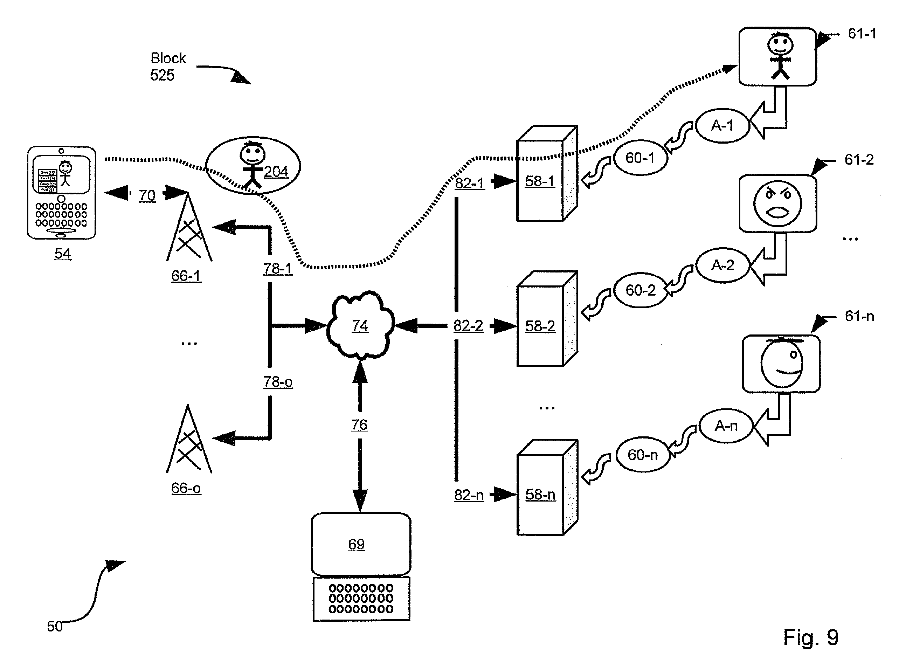

Performance of block 525 is represented in Figure 9, where it is assumed that the account identified at block 515 is account A-1, and accordingly, captured image 204 is then sent server 58-1 and stored as graphic identifier 61-1.

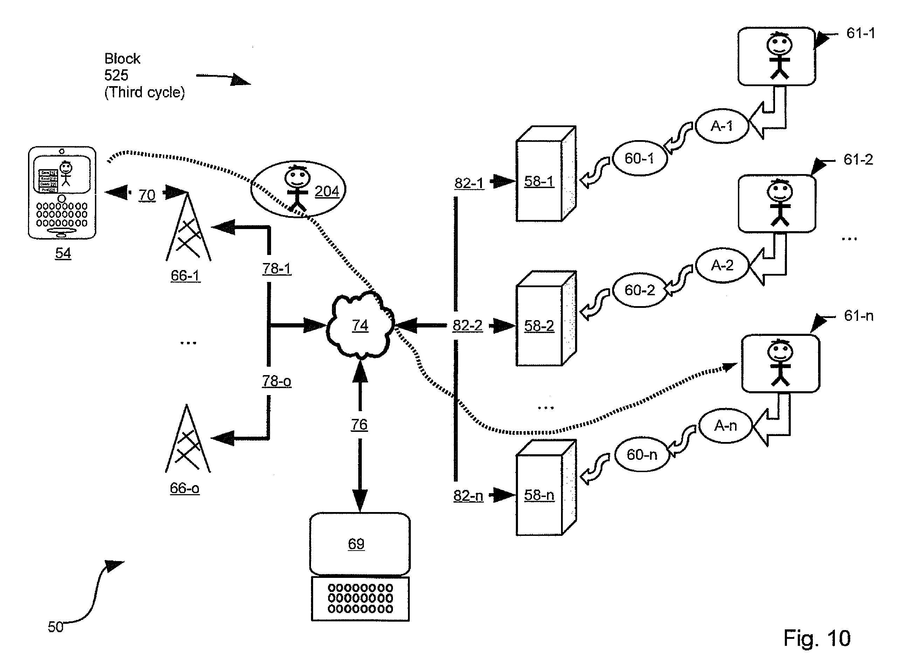

Referring again to Figure 6, block 530 comprises determining if there are additional associated accounts. A "No" determination ends method 500. A "yes" determination leads to block 535, which comprises determining the next associated account. To help explain block 535 further, assume that account A-1 was identified as the first account at block 515. Accordingly, at block 535, account A-2 will be the next identified account. At this point method 500 returns to block 520, at which point account A-2 is accessed, and at block 525 captured image 204 is sent to server 58-2 and stored as graphic identifier 61-2. Note that during this cycle through block 520 and block 530, an application programming interface that corresponds with social networking application 60-2 may be utilized. The third cycle through block 525, according to the specific illustrative example, is represented in Figure 10 at which point graphic identifier 61-n is also updated to include captured image 204. After this third illustrative cycle through block 520 and block 530, all accounts A will have their respective graphic identifiers 61 updated, and method 500 will end.

It is to be understood that the sequence of performance of blocks in method 500 need not be exactly as shown. Furthermore, it is to be understood that method 500 can be varied so that block 520 and block 525 are performed in parallel, or substantially in parallel, for each account. Expressed differently, multiple threads can be executed in parallel, or substantially in parallel, for block 520 and block 525 for each account.

One advantage of the present specification is the fact that device 54 can be situated in any location that is within communication range of a base station 66, and in that location a plurality of graphic identifiers 61 across disparate social networking accounts A can be updated. Indeed, any or all of the graphic identifiers 61 can be so updated using the teachings of this specification. By the same token, access of *any* account A from client machine 69 will result in a near real-time generation of a graphic identifier 61 that corresponds to a captured image from the location of the device 54. Furthermore, additional changes to graphic identifiers 61 can be made frequently.

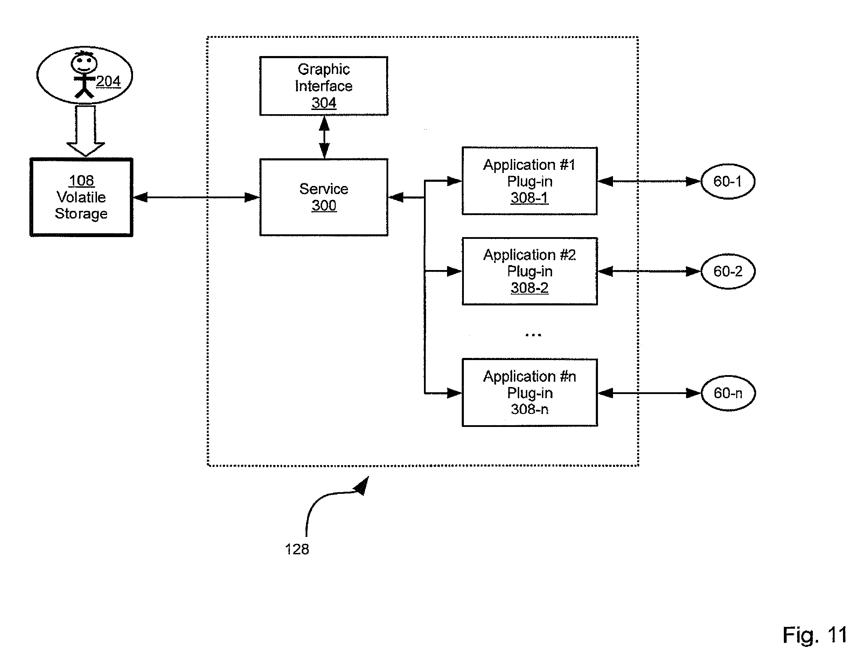

Figure 11 illustrates a non-limiting example of how publication manager application 128 can be implemented. Publication manager application 128 thus includes a service 300 that can access captured images, such as captured image 204, stored on volatile storage 108. Service 300 interacts with a graphic interface 304. Graphic interface 304 can, as described above, be a plug-in to image capture application 124 to provide additional menu options, such as post selection 224, within the menus that are offered within image capture application 124. In other implementations, graphic interface 304 can be another interface that can be generated on display 158 in order to receive a selection of captured image 204 (or other graphic maintained on device 54) for posting to one or more accounts A. Such a graphic interface 304 can also include radio boxes or other input mechanisms to indicate which accounts A are be updated with captured image 204 using method 500. Such input selections thus control the first account identified at block 515 and what other additional accounts are identified at block 535.

Publication manager application 128 also comprises a plurality of application plug-ins 308. Application plug-ins 308 are thus uniquely coded to interact with their respective applications 60. For example, where application 60-1 is FACEBOOK^{™}, then application plug-in 308-1 is coded to correspond with the interface that is generated by FACEBOOK^{™} on network 74. By the same token, application plug-in 308-1 is also coded for interactions with service 300 using method 500 or a variation thereon. Those skilled in the art will now recognize that application plug-in 308-2 is likewise coded to correspond with the interface that corresponds with application 60-2, and application plug-in 308-n is likewise coded to correspond with the interface that corresponds with application 60-n. Another advantage of this specification will now also be apparent, in that the use of plug-ins 308 can facilitate rapid deployment of additional capabilities to interact with different applications 60, without have to create a unique application for device 54, or having to have device 54 execute a browser application that attempts to mimic the full capabilities of a desktop browser application for which applications 60 are often tailored. Instead, service 300 can be coded in a manner that is optimized for the processing and other resources of device 54. Likewise, graphic interface 304 can be coded and optimized for the processing and display resources of device 54, but without sacrificing the ability to connect with new or different applications 60.

Those skilled in the art will appreciate that in some implementations, the functionality of mobile devices 54, 54a can be implemented using pre-programmed hardware or firmware elements (e.g., application specific integrated circuits (ASICs), electrically erasable programmable read-only memories (EEPROMs), etc.), or other related components. In other implementations, the functionality of mobile devices 54, 54a can be achieved using a computing apparatus that has access to a code memory (not shown) which stores computer-readable program code for operation of the computing apparatus. The computer-readable program code could be stored on a non-transitory computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

Variations, subsets, enhancements and combinations of the foregoing are contemplated. For example, in some implementations, device 54 can be configured to automatically post or publish the graphic to all networking accounts which are already logged-in to from device 54.

## Claims

1. A method for electronically posting a graphic identifier to a plurality of servers, the method comprising:
receiving a graphic at a processor of a mobile electronic device;
receiving, at said processor, an instruction to post said graphic as a graphic identifier on two or more accounts that are associated with said mobile electronic device;
identifying, using said processor, said two or more accounts;
connecting, via a network, to at least one of said plurality of servers hosting said two or more accounts; and
transmitting, via said network, said graphic for publication as a graphic identifier for said two or more accounts.

2. The method of claim 1 wherein said graphic comprises a photograph captured by said mobile electronic device.

3. The method of claim 2 wherein said instruction is received from a menu generated within a camera application within said mobile Electronic device.

4. The method of any of claims 1 to 3 wherein said instruction is a single instruction.

5. The method of any of claims 1 to 4 wherein said transmitting is effected via a plug-in application that is configured to interact with an application on each of said at least one of said plurality of servers.

6. The method of any of claims 1 to 5 wherein at least one of said two or more accounts is a social networking account.

7. The method of any of claims 1 to 5 wherein at least one of said two or more accounts is an instant message account.

8. The method of any of claims 1 to 5 wherein at least one of said two or more accounts is an online community account.

9. The method of any of claims 1 to 5 wherein at least one of said two or more accounts is an enterprise email account.

10. The method of any of claims 1 to 9 further comprising automatically transmitting said graphic to all said two or more accounts which have been logged in from said mobile electronic device.

11. The method of any of claims 1 to 10 wherein said two or more accounts which have been logged in are logged in via provision of authentication of log in credentials prior to performance of said method.

12. The method of any of claims 1 to 11 wherein said graphic corresponds to an avatar for each of said two or more accounts.

13. The method of any of claims 1 to 12 further comprising selecting said two or more accounts prior to said connecting and said transmitting.

14. A mobile electronic device for posting a graphic identifier to a plurality of servers, comprising a processor and a network interface to implement the steps of the method of claims 1 to 13.

15. A computer program product, for a mobile electronic device comprising a processor, the computer program product comprising a non-transitory computer-readable storage medium having a computer-readable code adapted to be executed on the processor to implement a method for electronically posting a graphic identifier to a plurality of servers, the method comprising steps of claims 1 to 13.
